# EUROPÄISCHE PATENTSCHRIFT

(11) **EP 3 631 075 B1**
(45) Veröffentlichungstag und Bekanntmachung des Hinweises auf die Patenterteilung: **13.07.2022**
(21) Anmeldenummer: 18727780.1
(22) Anmeldetag: 25.05.2018
(51) Int. Cl.: D06F 37/04

(54) **FLANSCHWELLENVORRICHTUNG UND WASCHMASCHINE**
FLANGE SHAFT DEVICE AND WASHING MACHINE
DISPOSITIF D'ARBRE À BRIDE ET MACHINE À LAVER

(30) Priorität: 01.06.2017 DE 102017112136
(43) Veröffentlichungstag der Anmeldung: 08.04.2020
(73) Patentinhaber: Miele & Cie. KG, 33332 Gütersloh (DE)
(72) Erfinder: LASNER, Steffen, 33829 Borgholzhausen (DE); FECHTEL, Benedikt, 33378 Rheda-Wiedenbr ck (DE); SCHARMÜLLER, Michael, 4860 Lenzing (AT); GRAUSGRUBER, Klaus, 4691 Breitensch tzing (AT)
(86) Internationale Anmeldenummer: PCT/EP2018/063798
(87) Internationale Veröffentlichungsnummer: WO 2018/219814

(56) Entgegenhaltungen:
- EP-A1- 1 798 322
- DE-A1- 19 532 783

## Beschreibung

Die Erfindung betrifft eine Flanschwellenvorrichtung zur drehbaren Lagerung einer Trommel in einer Waschmaschine, sowie eine Waschmaschine mit einer derartigen Flanschwellenvorrichtung.

Die sichere und belastbare Aufhängung einer Trommel in einem Laugenbehälter einer Trommelwaschmaschine ist eine sehr delikate Angelegenheit. Da die Trommel zur Waschmaschinenöffnung hin frei sein muss, kann die Befestigung der Trommel lediglich am hinteren Ende, also am kreisförmigen Trommelboden erfolgen. Ein üblicherweise hierzu vorgesehener Flansch verbindet den Trommelboden mit einer Antriebswelle einer Antriebsvorrichtung, welche wiederum für den Drehantrieb der Trommel verantwortlich ist. Flansch und Antriebswelle bilden also eine Einheit, welche nachfolgend als Flanschwelle oder Flanschwellenvorrichtung bezeichnet wird. Diese Flanschwellenvorrichtung wird üblicherweise am Trommelboden oder an einem Trommelmantel der Trommel befestigt und muss das Drehmoment der Antriebsvorrichtung von der Antriebswelle auf die Trommel übertragen.

Gleichzeitig muss die Flanschwellenvorrichtung in der Lage sein, alle aufgrund einer etwaigen Unwucht entstehenden Kräfte aufnehmen zu können. Eine solche Unwucht stellt sich bei einer unsymmetrischen Verteilung von Wäsche in der Trommel ein, aber auch bereits dann, wenn der Laugenbehälter teilweise mit Laugenflüssigkeit gefüllt ist. Von modernen Waschmaschinen wird erwartet, dass sie für eine große Beladungsmenge ausgelegt sind. Zudem sollen sie beim Schleudervorgang höhere Umdrehungsgeschwindigkeiten der Trommel unterstützen, um die Restfeuchte in der fertig gewaschenen Wäsche zu verringern. Diese wachsenden Anforderungen führen zu steigenden Belastungen der Flanschwellenvorrichtung.

Aus einem druckschriftlich nicht belegten Stand der Technik sind Flanschwellenvorrichtungen bekannt, bei denen ein sternförmiger Flansch mit der Antriebswelle verbunden ist. Der sternförmige Flansch besteht aus drei Armen, die sich von der Antriebswelle radial nach außen erstrecken. Gemäß einer solchen bekannten Ausführungsform ist der sternförmige Flansch aus einer gebogenen Stahlplatte zusammengesetzt, welche mit der Antriebswelle verschweißt ist. Um die Steifigkeit eines solchen Flansches zu erhöhen, kann eine Stahlplatte mit größerer Plattenstärke gewählt werden, was jedoch die Anordnung insgesamt schwerer machen und eine mit größerer Leistung dimensionierte Antriebsvorrichtung notwendig machen würde.

Bei einem alternativen, ebenfalls druckschriftlich nicht belegten Stand der Technik, ist der auch hier sternförmige Flansch aus Aluminium und mittels Druckguss hergestellt. Um die Verbindung mit der Antriebswelle zu bilden, wird hierbei ein Ende der Antriebswelle während des Gussvorgangs in der Gussform angeordnet und mit Aluminium umgossen. Vorteil des Druckgussteils ist, dass die Form des Flansches mit einer optimierten Materialverteilung ausgebildet werden kann. Insbesondere kann die Materialstärke und damit die Steifigkeit des Flansches an jedem Punkt den Erfordernissen entsprechend gewählt werden. Allerdings besitzt Aluminium ein geringeres E-Modul und somit eine geringere Steifigkeit als Stahl. Ein Aluminiumflansch muss also von vornherein mit einer größeren Materialstärke ausgebildet sein, als ein Flansch aus Stahl. Soll die Steifigkeit des Flansches aufgrund der steigenden Anforderungen erhöht werden, dann gerät das Druckgussverfahren an seine Grenzen, da sich ab einer gewissen Materialstärke die mechanischen Eigenschaften des Aluminiums verschlechtern. Zudem benötigt ein solcher Aluminiumflansch mehr Bauraum in der Waschmaschine, was oft nicht möglich ist.

Aus der DE 195 32 783 A1 und EP 1 798 322 A1 sind weitere Flanschwellenvorrichtungen bekannt.

Der Erfindung stellt sich somit das Problem, eine Flanschwellenvorrichtung für eine stabile und verlässliche Drehaufhängung auch von größeren Trommeln im Laugenbehälter bereitzustellen.

Erfindungsgemäß wird dieses Problem durch eine Flanschwellenvorrichtung mit den Merkmalen des Patentanspruchs 1 gelöst. Vorteilhafte Ausgestaltungen und Weiterbildungen der Erfindung ergeben sich aus den nachfolgenden Unteransprüchen.

Der Erfindung liegt die Überlegung zugrunde, den Verbindungsflansch der Flanschwellenvorrichtung aus zumindest zwei aus Stahlblech geformten Elementen zusammenzusetzen, welche entlang der Längsachse der Antriebswelle und damit entlang der Drehachse der Trommel aufeinander gestapelt werden. Dies hat den Vorteil, dass eine höhere Variabilität hinsichtlich der Materialstärke und Materialverteilung entlang des Verbindungsflansches erreichen werden kann. Dadurch, dass zumindest zwei Stahlbleche, nämlich zumindest ein Hauptelement und ein Stützelement, welche jeweils zu einem gewissen Maße unabhängig voneinander geformt sind, zusammen den Verbindungsflansch bilden, sind mehr Freiheitsgrade vorhanden. Es hat sich herausgestellt, dass gerade diese Freiheitsgrade ausreichen, um den unterschiedlichen Anforderungen besser gerecht zu werden, welche eine Flanschwellenvorrichtung erfüllen muss, nämlich insbesondere eine ausreichende Steifigkeit und eine gute Verbindung zwischen Verbindungsflansch und Antriebswelle zu gewährleisten, während er gleichzeitig nicht zu schwer ist und aufgrund seiner Form in den dafür vorgesehenen Bauraum hinein passt.

Dass das Hauptelement und das Stützelement entlang der Längsachse der Antriebswelle aufeinander angeordnet sind bedeutet, dass sie an unterschiedlichen Positionen an der Längsachse angeordnet sind. Die Elemente können entlang der Längsachse unmittelbar aufeinander folgen, gegebenenfalls mit einem Abstand, oder sich sogar an Punkten oder Oberflächenbereichen berühren. Es können in bestimmten Ausführungsformen auch Zwischenelemente zwischen dem Hauptelement und dem Stützelement angeordnet sein. Die Längsachse der Antriebswelle bildet in der Waschmaschine eine Drehachse der Trommel. Während sich die Antriebswelle also stabförmig entlang der Längsachse erstreckt, dehnt sich der Verbindungsflansch im Wesentlichen entlang einer Ebene aus, welche senkrecht zu dieser Längsachse verläuft. Der Verbindungsflansch ist mit der Antriebswelle fest verbunden. Anders als beim Druckgussverfahren, bei dem ein Ende der Antriebswelle bei der Herstellung des Verbindungsflansches umgossen wird und sich somit eine formschlüssige Verbindung ausbildet, wird der Verbindungsflansch vorliegend vorzugsweise mittels Klemm- und/oder Schweiß- bzw. Lötverbindungen an der Antriebswelle befestigt.

Der Verbindungsflansch ist vorzugsweise bündig an einem Ende der Antriebswelle angebracht. Bevorzugterweise erstreckt sich der Verbindungsflansch in radialer Richtung im Wesentlichen bis zu einem Rand der Trommel bzw. des Trommelbodens, insbesondere bis zur Trommelwand. Die Antriebswelle ist derart ausgestaltet, dass sie in der Waschmaschine mit dem Antriebsmotor verbunden ist. Der Verbindungsflansch weist vorzugsweise Verbindungselemente auf, mittels denen er mit der Trommel verbunden werden kann. Diese Verbindung findet vorzugsweise am Trommelboden und/oder am Trommelmantel statt. Bei den Verbindungselementen kann es sich beispielsweise um Bohrungen im Verbindungsflansch handeln, welche gegebenenfalls Innengewinden aufweisen.

Vorzugsweise weist der Verbindungsflansch im Wesentlichen eine dreizählige oder mehrzählige (n-zählige, mit n > 3) Drehsymmetrie auf, wobei die Längsachse gleichzeitig die Drehsymmetrieachse bildet. Hierbei kann das Hauptelement, das Stützelement oder können beide diese Elemente die besagte Drehsymmetrie aufweisen. "Im Wesentlichen" bedeutet hierbei, dass etwaige kleinere Veränderungen am Erscheinungsbild des Verbindungsflansches bei einer entsprechenden (360°/n) Drehung um die Drehsymmetrieachse unschädlich sind, wenn sie die Gewichtsverteilung und/oder Steifigkeitsverteilung des Verbindungsflansches nicht wesentlich beeinträchtigen. Dies bedeutet insbesondere, dass Markierungen und Justierelemente, beispielsweise Justierbohrungen, nicht die Drehsymmetrie infrage stellen.

Bei einer bevorzugten Ausgestaltung ist vorgesehen, dass das Hauptelement sternenförmig mit zumindest drei Armen ausgebildet ist, welche sich von der Antriebswelle senkrecht zur Längsachse der Antriebswelle jeweils entlang einer zugehörigen Armachse radial nach außen erstrecken. Bei drei Armen kreuzen sich die zugehörigen drei Armachsen auf der Längsachse in einem Winkel von 120° zueinander. Die sternförmige Ausführung, insbesondere in der Ausgestaltung mit drei Armen, bietet einen Kompromiss zwischen Steifigkeit und Materialeinsparung, beispielsweise im Vergleich zu einer Vollkreis-Scheibe. Verbindungselemente zur Verbindung des Verbindungsflansches mit der Trommel können insbesondere an den von der Antriebswelle wegweisenden Enden der Arme angeordnet sein. Vorzugsweise weist der Verbindungsflansch eine Spiegelsymmetrie mit einer Symmetrieachse auf, welche gleichzeitig eine Armachse ist.

Der Verbindungsflansch und/oder das Hauptelement sind vorzugsweise konvex. Das heißt, das Stahlblech des Hauptelementes ist nahe der Längsachse zu dem Trommelboden hin gewölbt, sodass es sich an den Trommelboden anschmiegen kann, während es mit radialem Abstand zur Längsachse in Richtung eines dem Verbindungsflansch gegenüberliegenden Endes der Antriebswelle biegt. Ist das Hauptelement sternenförmig mit zumindest drei Armen ausgebildet, dann sind die Arme vorzugsweise ebenfalls konvex ausgebildet, wölben sich also zu dem Trommelboden hin. Vorzugsweise ist vorgesehen, dass zumindest einer der Arme in einer senkrecht zu seiner Armachse verlaufenden Querschnittsebene einen hutförmigen Querschnitt aufweist. Das Hutprofil gibt dem zugehörigen Arm zusätzliche Steifigkeit gegen eine Verbiegung aus der Armachse heraus. Hutförmig bedeutet U-förmig mit einer Art Hutkrempe. Insbesondere bedeutet es, dass der Armquerschnitt eine an dem Trommelboden anliegende Langseite und zwei sich an Enden der Langseite in einem stumpfen Winkel anschließende Kurzseiten aufweist. An den der Langseite gegenüberliegenden Enden der Kurzseiten kann sich jeweils eine im Wesentlichen parallel zur Langseite liegende Wand anschließen. In der Hut-Analogie wäre diese Wand als Hutkrempe zu sehen. Vorzugsweise verjüngt sich der Arm radial nach außen, so dass der Hut entlang der Armachse radial nach außen kleiner wird. Die Hutform beschränkt sich natürlich lediglich auf den zweidimensionalen Querschnitt.

Bevorzugterweise wird der hutförmige Querschnitt mittels des Stützelementes zur Antriebswelle hin zu einem kastenförmigen Querschnitt ergänzt. Das bedeutet, zumindest an einer bestimmten entlang der Armachse gegenüber der Längsachse versetzten Position weist das Stützelement einen Wandabschnitt auf, welcher die U-Form zu einem Rechteck ergänzt, insbesondere parallel zur Langseite im Armquerschnitt verläuft und auf den Enden der Kurzseiten aufliegt. Der kastenförmige Querschnitt weist eine erhöhte Stabilität gegenüber Verformungen auf. Das Schließen des hutförmigen Querschnitts erst in der Nähe der Antriebswelle, während der hutförmige Querschnitt weiter weg von der Antriebswelle ohne einen derartigen Abschluss bleibt, hat den Vorteil, dass im Außenbereich des Trommelbodens Material eingespart wird, während die Steifigkeit des Verbindungsflansches zur Antriebswelle hin zunimmt. Hiermit wird einer radialen Zunahme der Belastung (Fliehkraft infolge einer Unwucht) durch die steigende Drehzahl und somit der radial in Richtung Achse ansteigenden Biegebeanspruchung Rechnung getragen.

Gemäß einer bevorzugten Weiterbildung weist der Verbindungsflansch ein weiteres Stützelement auf, welches entlang der Längsachse am Stützelement angeordnet ist, so dass das Hauptelement, das Stützelement und das weitere Stützelement parallel zur Längsachse einen Stapel bilden. Die drei Elemente sind vorzugsweise derart aufeinandergestapelt, dass ihre radiale Ausdehnung senkrecht zur Längsachse entlang der Längsachse vom Trommelboden weg abnimmt. Insbesondere weist das Hauptelement in einer Aufsicht-Projektion auf einer Ebene senkrecht zur Längsachse und/oder in einer Seiten-Projektion auf einer Ebene parallel zur Längsachse eine größere Ausdehnung auf, als das Stützelement. Das gleiche gilt vorzugsweise für das Stützelement im Verhältnis zu dem weiteren Stützelement. Einfach gesprochen ist also das Hauptelement größer als das Stützelement, welches wiederum größer ist als das weitere Stützelement.

Das weitere Stützelement ist vorzugsweise ebenfalls aus einem Stahlblech geformt. In einer einfachen Ausführung weist es die Form eines Kreisrings auf, wobei der Innendurchmesser dem Durchmesser der Antriebswelle entspricht. Der kreisförmige Rand der Innenbohrung ist zudem vorzugsweise zu einem rohrförmigen bzw. hülsenförmigen Ansatz gebogen, welcher zum Beispiel formschlüssig um die Antriebswelle angeordnet ist. Unabhängig hiervon ist es auch für das Hauptelement von Vorteil, wenn es eine Innenbohrung mit einer weiteren zu einem rohrförmigen bzw. hülsenförmigen Ansatz gebogenen Innenrand aufweist. In beiden Fällen können die hülsenförmigen Ansätze vorzugsweise jeweils eine formschlüssige Verbindung mit der Antriebswelle bilden. Das vorzugsweise zwischen dem weiteren Stützelement und dem Hauptelement angeordnete Stützelement muss dann natürlich ebenfalls eine Innenbohrung zur Aufnahme der Antriebswelle besitzen. Wenn die Innenbohrung des Hauptelementes einen hülsenförmigen Ansatz aufweist, dann kann die Innenbohrung des Stützelementes mit einem Durchmesser ausgebildet sein, welcher dem Außendurchmesser dieses hülsenförmigen Ansatzes entspricht. In diesem Fall würde dann der Rand der Innenbohrung des Stützelementes den hülsenförmigen Ansatz des Hauptelementes weiter radial gegen die Antriebswelle drücken.

Gemäß einer bevorzugten Ausführungsform weist/weisen das Hauptelement, das Stützelement und/oder das weitere Stützelement jeweils eine Innenbohrung, insbesondere eine mittige Innenbohrung bzw. eine Mittelbohrung auf, in die das Antriebselement eingeführt ist. Wenn eine solche Innenbohrung vorgesehen ist, kann sie gegenüber dem Außendurchmesser der Antriebswelle einen derartigen kleineren Durchmesser aufweisen, dass das zugehörige Element, also das Hauptelement, das Stützelement und/oder das weitere Stützelement, von außen ringförmig radial nach innen an die Antriebswelle angedrückt und so mittels Kraftschluss gehalten wird. Darüber hinaus können einzelne Elemente auch untereinander durch Formschluss und/oder Kraftschluss verbunden sein.

Alternativ oder zusätzlich zu einer kraftschlüssigen Verbindung sind vorzugsweise die Antriebswelle, das Hauptelement, das Stützelement und/oder das weitere Stützelement miteinander verlötet und/oder verschweißt. Insbesondere kann hierzu Laserschweißen eingesetzt werden. Mittels Verschweißen oder Verlöten kann eine für Fluide undurchlässige und somit dichte Verbindung hergestellt werden. Wenn beispielsweise entlang eines Randes der Innenbohrung des Hauptelements, des Stützelements und/oder des weiteren Stützelements eine Schweiß- oder Lötnaht zur Antriebswelle gebildet wird, dann wird verhindert, dass Feuchtigkeit zwischen der Flanschwellenvorrichtung und der Antriebswelle durchtritt und einen Teil der Antriebswelle, welche in Bezug auf die Naht von der Trommel abgewandt ist, benetzt. Das Verschweißen oder Verlöten kann vorzugsweise bei einer Anordnung der Antriebswelle an dem Hauptelement, dem Stützelement und/oder dem weiteren Stützelement im Stumpfstoß und/oder im Durchzug erfolgen.

Vorzugsweise ist mittels der Verlötung(en) und/oder Verschweißung(en) ein hermetisch abgedichteter Hohlraum gebildet, welcher sich parallel zur Längsachse erstreckt und teilweise durch die Antriebswelle begrenzt ist. Der Hohlraum schützt in diesem Fall zumindest den Teil der Antriebswelle, welcher die Begrenzung des Hohlraums bildet. Insbesondere können in der Wachmaschine Fluide aus dem Laugenbehälter nicht in diesen Hohlraum gelangen, so dass dieser Teil der Antriebswelle bereits mit der Verbindung zum Verbindungsflansch vor Korrosion geschützt ist. Es sind dann keine zusätzlichen Dichtelemente notwendig, um das zur Trommel hin gerichtete Ende der Antriebswelle vor Feuchtigkeit zu schützen. Die Antriebswelle muss dann auch nicht oder zumindest nicht vollständig aus korrosionsbeständigem Material gebildet sein. Hermetisch dicht bzw. abgedichtet bedeutet in diesem Fall, dass insbesondere keine Fluide und besonders keine Feuchtigkeit in den Hohlraum eintreten kann.

Der Hohlraum ist vorzugsweise ringförmig um die Antriebswelle angeordnet und zusätzlich zu der Antriebswelle durch ein oder mehreren der Elemente begrenzt. Bevorzugt sind es mehrere Schweiß- oder Lötnähte zwischen Antriebswelle, Hauptelement, Stützelement und/oder weiterem Stützelement, welche zur hermetischen Abdichtung des Hohlraums beitragen, bevorzugt sind Nähte an allen vier Elementen beteiligt. Insbesondere kann der Hohlraum sich entlang der Oberfläche der Antriebswelle zwischen dem Hauptelement, insbesondere einer Innenbohrung des Hauptelementes, und dem Stützelement oder dem weiteren Stützelement, insbesondere einer Innenbohrung des Stützelements oder des weiteren Stützelements, erstrecken.

Erfindungsgemäß nimmt eine Blechstärke des Hauptelementes und/oder eine Gesamtblechstärke des Verbindungsflansches entlang einer radialen Achse zur Längsachse hin zu, wobei die Gesamtblechstärke als Summe aller Blechstärken der Elemente definiert ist, welche sich an der betreffenden Radialposition auf der radialen Achse zum Verbindungsflansch zusammensetzen. Einfach ausgedrückt bedeutet das, dass die Blechstärke bzw. die Gesamtblechstärke von außen zur Antriebswelle hin zunimmt. Dies ist insbesondere dann vom Vorteil, wenn wie üblich die Befestigung des Verbindungsflansches mit der Trommel nahe des äußeren Randes der Trommel bzw. des Verbindungsflansches erfolgt, also radial am weitesten weg von der Antriebswelle. Mit einem solchen Verlauf der Blechstärke bzw. der Gesamtblechstärke wird das Blechmaterial optimiert entsprechend dem Verlauf des Krafteintrags in den Verbindungsflansch eingesetzt. Das bedeutet, dort wo die Kraft von der Antriebswelle auf den Verbindungsflansch geringer ist, wird weniger Material eingesetzt, als dort, wo der Krafteintrag auf den Verbindungsflansch am größten ist, nämlich an der Antriebswelle.

Der Anstieg der Blechstärke und/oder der Gesamtblechstärke kann graduell oder stufenweise erfolgen. Erfolgt der Anstieg stufenweise, dann ist/sind das Hauptelement, der Verbindungsflansch und/oder bei dem mehrarmigen Fall, wie nachfolgend geschildert, der Arm vorzugsweise ausgehend von der Antriebswelle radial nach außen in unterschiedliche Stärkenbereiche unterteilt, in denen jeweils eine im Wesentliche einheitliche Blechstärke und/oder Gesamtblechstärke herrscht. Bei der Ermittlung der Blechstärke bzw. Gesamtblechstärke sollten eventuelle lokalisierte Bohrungen oder Vertiefungen, die beispielsweise zur Verbindung oder zur Justierung dienen, vorzugsweise unbeachtet bleiben. Ferner werden definitionsgemäß bei der Ermittlung der Gesamtblechstärke mögliche sich axial zwischen den einzelnen Elementen erstreckende Zwischenräume nicht mit einberechnet. Schließlich wird bei der Ermittlung der Gesamtblechstärke eine möglicherweise lokal vorliegende Schrägstellung eines Stahlblechs nicht derart berücksichtigt, dass eine auf die radiale Achse projektierte Blechdicke errechnet wird. Es geht hier vielmehr um die Steigerung der Steifigkeit des Verbindungsflansches, welche in erster Linie auf der Blechstärke der eingesetzten Stahlbleche beruht und erst nachgeordnet auch auf die Verformung der Stahlbleche.

Ein Anstieg der Blechstärke des Hauptelementes bedeutet, dass das Hauptelement aus einem Stahlblech geformt ist, welcher eine nicht gleichbleibende Dicke aufweist. Ein Anstieg der Gesamtblechstärke wird vorteilhafterweise dadurch erreicht, dass eine Anzahl an übereinander liegenden Elementen in Richtung der Antriebswelle steigt. Vorzugsweise beginnt der Verbindungsflansch ab einem bestimmten Radius von der Längsachse entfernt zunächst nur mit dem Stahlblech des Hauptelements, beispielsweise mit einer Blechstärke von etwa 2 mm. Näher zur Längsachse hin kommt das Stahlblech des Stützelementes hinzu, beispielsweise mit einer Blechstärke von etwa 2,25 mm. Ab dieser radialen Position entlang der radialen Achse weist der Verbindungsflansch also eine Gesamtblechstärke von 2 mm + 2,25 mm = 4,25 mm auf. Noch näher zur Antriebswelle kommt schließlich das weitere Stützelement hinzu, beispielsweise mit einer Blechstärke von etwa 3 mm. Ab dieser radialen Position bis zur Antriebswelle weist der Verbindungsflansch auf der radialen Achse dann eine Gesamtblechstärke auf, welche der Summe aller drei Elemente entspricht, nämlich im vorliegenden Beispiel von 7,25 mm.

Die Blechstärke bzw. Gesamtblechstärke nimmt entlang einer radialen Achse zu, also bei Bewegung eines Messpunktes senkrecht zur Längsachse der Antriebswelle zur Antriebswelle hin. Vorzugsweise ist dies für jede beliebige radiale Achse der Fall, wobei es dann einige radiale Achsen geben kann, entlang derer die Blechstärke bzw. Gesamtblechstärke zumindest nicht abnimmt. Alternativ nimmt die Blechstärke bzw. Gesamtblechstärke zumindest oder ausschließlich entlang einer oder einigen bestimmte(n) radiale(n) Achse(n) zu. Wenn der Verbindungsflansch und/oder die Flanschwellenvorrichtung mit mehreren Armen ausgebildet ist/sind, dann handelt es sich bei der radialen Achse insbesondere um eine Armachse.

Der Zusammenbau des Verbindungsflansches aus einem Hauptelement und einem Stützelement erinnert vorzugsweise an eine Tragwerkstruktur, wie sie auch beim Bau von Flugzeugflügeln verwendet wird, mit zumindest einem Obergurt und einem Untergurt. Das Aufspannen von Ober- und Untergurt sorgt für eine optimale Aufnahme der vorherrschenden Belastung im Sinne einer wechselnden Zug-Druck- Belastung. Derartige Strukturen weisen zudem eine hohe Steifigkeit auf. Gemäß einer bevorzugten Ausführungsform ist zudem vorgesehen, dass die Antriebswelle, das Hauptelement, das Stützelement und/oder das weitere Stützelement in einer Schnittebene, in welcher die Längsachse verläuft, eine oder mehrere im Wesentlichen dreieckförmige Struktur(en) ausbilden. Das bedeutet insbesondere, dass die Schnittkanten miteinander verbundener Elemente des Verbindungsflansches in der Schnittebene jeweils Schenkel eines oder mehrerer Dreiecke bilden, welche vorzugsweise ebenfalls zumindest paarweise miteinander verbunden sind. Eine derartige Fachwerkstruktur oder an einem Fachwerk angelehnte Struktur weist eine erhöhte Steifigkeit auf. Die dreieckförmige(n) Struktur(en) dient/dienen insbesondere einer verbesserten Lastenverteilung innerhalb des Verbindungsflansches. Das bedeutet, die einzelnen Schenkel der dreieckförmigen Struktur(en) können zur Entlastung oder zur Lastübertragung zwischen Elementen und Abschnitten des Verbindungsflansches dienen.

Die Schnittebene wird durch die Längsachse und durch eine Achse aufgespannt, welche radial von der Längsachse absteht. Wenn das Merkmal hinsichtlich der Ansteigenden Blechstärke und/oder Gesamtblechstärke entlang einer radialen Achse ebenfalls erfüllt ist, dann kann die Schnittebene durch die Längsachse und die radiale Achse aufgespannt sein. Alternativ oder zusätzlich kann das Merkmal hinsichtlich der dreieckförmigen Struktur(en) in einer Schnittebene erfüllt sein, welche durch die Längsachse und einer senkrecht zur Längsachse und zur radialen Achse angeordneten weiteren radialen Achse aufgespannt wird. Ein oder mehr dreieckförmigen Struktur(en) können auch in im Wesentlichen allen (unendlich vielen) Schnittebenen gebildet sein, auf denen die Längsachse liegt. In diesem Fall handelt es sich bei der/den dreieckförmigen Struktur(en) um einen Querschnitt einer ringförmigen geschlossenen Struktur in dem Verbindungsflansch. Wenn der Verbindungsflansch und/oder die Flanschwellenvorrichtung mit mehreren Armen ausgebildet ist/sind, dann handelt es sich bei der radialen Achse insbesondere um eine Armachse. Mit anderen Worten wird dann vorzugsweise die Schnittebene, in der die dreieckförmige(n) Struktur(en) ausgebildet ist/sind, durch die Längsachse und einem der Armachsen aufgespannt.

Ein durch einen Blechabschnitt erzeugter Schenkel einer dreieckförmigen Struktur kann, muss aber nicht unbedingt eine gerade Linie in der Schnittebene bilden. Vielmehr ist es unschädlich, wenn der Schenkel einen Binnenknick aufweist, beispielsweise um eine Verbindung mit einem weiteren Element des Verbindungsflansches zu ermöglichen oder zuzulassen. Zwei Schenkel einer dreieckförmigen Struktur können in besonderen Ausführungsformen durch ein gebogenes Stahlblech derart erzeugt sein, dass die Biegestelle eine von den besagten beiden Schenkeln eingeschlossene Ecke bildet. Vorzugsweise wird eine dreieckförmige Struktur durch das Hauptelement und das Stützelement gebildet. Zusätzlich oder alternativ wird vorzugsweise eine dreieckförmige Struktur durch die Antriebswelle, das Stützelement und das weitere Stützelement gebildet.

Das Hauptelement, das Stützelement und/oder das weitere Stützelement weisen vorzugsweise jeweils eine Blechstärke von zwischen 0,5 mm und 6 mm auf, bevorzugt zwischen 1 mm und 4 mm, wobei sich die Blechstärken voneinander unterscheiden können. Vorzugsweise steigt die Blechstärke von dem Hauptelement zu dem Stützelement und/oder von dem Stützelement zu dem weiteren Stützelement an.

Bevorzugterweise ist/sind das Hauptelement, das Stützelement und/oder das weitere Stützelement als Stanz-Biege-Element(e) ausgebildet. Derartige Elemente können mit großer Präzision und mit hohem Durchsatz preiswert hergestellt werden.

Die Erfindung betrifft weiterhin eine Waschmaschine mit einem Laugenbehälter, einer Flanschwellenvorrichtung nach einem der vorangehend oder nachfolgend beschriebenen Ausführungsformen und einer mittels der Flanschwellenvorrichtung in dem Laugenbehälter drehbar gehaltenen Trommel.

Ein Ausführungsbeispiel der Erfindung ist in den Zeichnungen rein schematisch dargestellt und wird nachfolgend näher beschrieben. Es zeigt
- Figur 1: eine schematische Ansicht einer Trommel mit einer hieran befestigten Flanschwellenvorrichtung gemäß einer bevorzugten Ausführungsform;
- Figur 2: eine perspektivische Ansicht auf die der Trommel abgewandten Seite einer Flanschwellenvorrichtung gemäß einer bevorzugten Ausführungsform;
- Figur 3: eine perspektivische Ansicht auf eine der Trommel zugewandten Flanschrückseite der Flanschwellenvorrichtung aus der Fig. 2;
- Figur 4: die Flanschwellenvorrichtung aus den Fig. 2 und 3 in einer Explosionsdarstellung;
- Figur 5: ein Schnittbild der Flanschwellenvorrichtung aus den Fig. 2 und 3;
- Figur 6: eine Querschnittsansicht der Flanschwellenvorrichtung aus Fig. 5;
- Figur 7: eine Querschnittsansicht der Flanschwellenvorrichtung aus Fig. 5 in einer Querschnittsebene senkrecht zu einer Armachse eines von drei Armen, fern von einer Längsachse;
- Figur 8: eine Querschnittsansicht der Flanschwellenvorrichtung aus Fig. 5 in einer weiteren Querschnittsebene senkrecht zur gleichen Armachse wie in Fig. 7, näher zur Längsachse; und
- Figur 9: eine Querschnittsansicht der Flanschwellenvorrichtung aus Fig. 5 in einer weiteren Querschnittsebene senkrecht zur gleichen Armachse wie in Fig. 7 und 8, entlang der Längsachse.

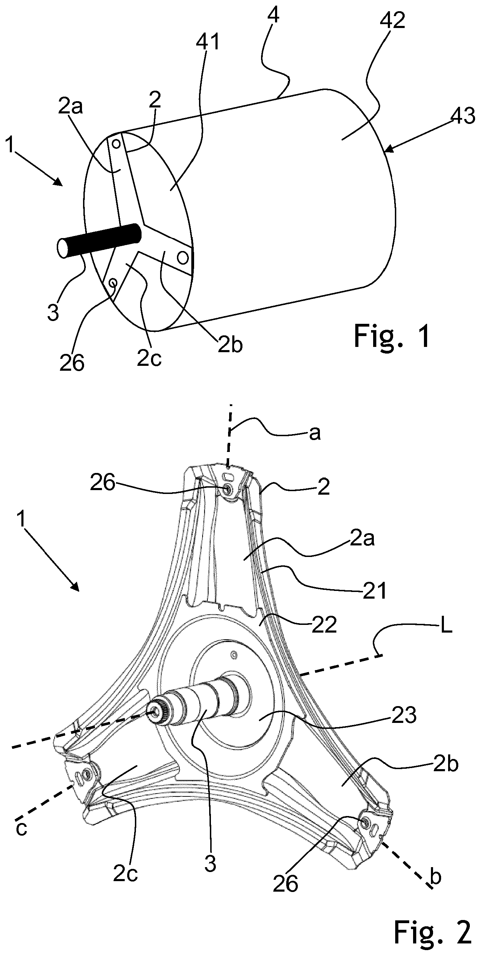

Fig. 1 zeigt eine schematische Ansicht einer Trommel 4 mit einer hieran befestigten Flanschwellenvorrichtung 1 gemäß einer bevorzugten Ausführungsform. Die Flanschwellenvorrichtung 1 ist aus einer Antriebswelle 3 und einem Verbindungsflansch 2 zusammengesetzt. Die Trommel 4 ist zylindrisch und weist einen Trommelmantel 42, einen Trommelboden 41 und eine dem Trommelboden 41 gegenüberliegende und in der Fig. 1 nicht sichtbare Trommelöffnung 43 auf. Der Verbindungsflansch der in der Fig. 1 angedeuteten Flanschwellenvorrichtung 1 ist sternenförmig und weist drei Arme 2a, 2b, 2c auf. Am äußeren Ende eines jeden Arms 2a, 2b, 2c ist ein Verbindungselement 26 angedeutet. Mit den Verbindungselementen 26 ist der Verbindungsflansch 2 mit der Trommel 4 verbunden, wobei der Verbindungsflansch 2 entweder mit dem Trommelboden 41 oder vorzugsweise zusätzlich auch mit dem Trommelmantel 42 verbunden sein kann, beispielsweise mittels Gewindestangen, welche sich entlang der gesamten Länge des Trommelmantels 42 erstrecken.

Fig. 2 zeigt eine perspektivische Ansicht auf die der Trommel 4 abgewandten Seite einer Flanschwellenvorrichtung 1 gemäß einer bevorzugten Ausführungsform. Die Antriebswelle 3 ist zylindrisch und erstreckt sich entlang einer Längsachse L. Im eingebauten Zustand in einer Waschmaschine (nicht dargestellt) ist die Längsachse L gleich eine Drehachse, um welche die Trommel 4 rotiert. In der Fig. 2 ist die sternförmige, dreiarmige Ausbildung des Verbindungsflansches 2 gut erkennbar. Der Verbindungsflansch 2 ist hier zusammengesetzt aus einem Hauptelement 21, einem Stützelement 22 sowie einem weiteren Stützelement 23. Diese drei Elemente 21, 22, 23 sind entlang der Längsachse L aufeinander gestapelt und mit der Antriebswelle 3 verbunden.

In der vorliegenden Ausführungsform gibt das Hauptelement 21 im Wesentlichen die sternförmige Form des Verbindungsflansches 2 vor und weist drei Arme 2a, 2b, 2c auf, welche sich jeweils entlang einer zugehörigen Armachse a, b, c von der Längsachse L radial nach außen erstrecken. Die drei Armachsen a, b, c weisen zueinander jeweils paarweise einen Winkel von 120° auf. Das Stützelement 22 kann ebenfalls als sternförmig und dreiarmig bezeichnet werden, wobei jedoch die drei Arme extrem verkürzt sind. Wie weiter unten erläutert wird, dient dies der Materialeinsparung. Als Folge hiervon weist das Stützelement 22 eher eine sechseckige Form auf. Den Elementstapel bzw. Plattenstapel schließt das weitere Stützelement 23 ab, welches kreisförmig ist und eine mittlere Bohrung aufweist, also eine ringförmige Gestalt hat.

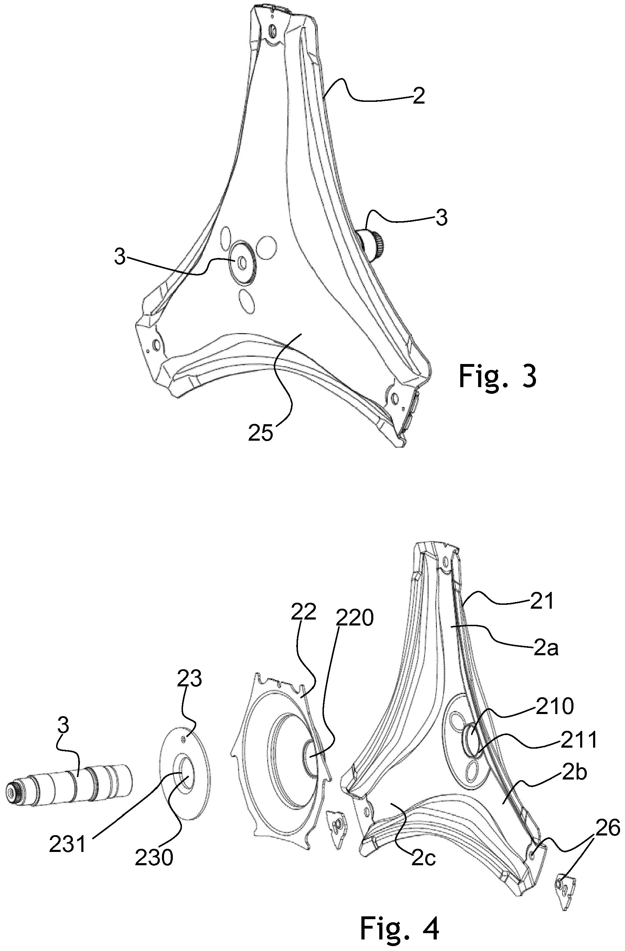

In der Fig. 3 wird eine perspektivische Ansicht auf eine der Trommel 4 zugewandten Flanschrückseite 25 der Flanschwellenvorrichtung 1 aus der Fig. 2 dargestellt. Die Flanschrückseite 25 wird durch eine Fläche des Hauptelementes 21 gebildet. Sie ist konvex und schmiegt sich beim Befestigen mit der Trommel 4 in eine konkave Aushöhlung des Trommelbodens 41 ein.

Eine Explosionsdarstellung der Flanschwellenvorrichtung 1 aus den Fig. 2 und 3 wird in der Fig. 4 dargestellt. Hier ist insbesondere erkennbar, dass jedes der Verbindungselemente 26 aus einer Bohrung in dem jeweiligen Arm 2a, 2b, 2c des Hauptelementes 21 und zusätzlich jeweils einem Plättchen gebildet ist, welches als Mutter für eine Gewindestange fungiert. Zudem sieht man in der Fig. 4, dass alle drei Elemente 21, 22, 23 jeweils eine Innenbohrung 210, 220, 230 aufweisen, in welche die Antriebswelle 3 eingeführt ist. Es sei hier noch erwähnt, dass das Hauptelement 21 und das Stützelement 22 dreizählig drehsymmetrisch um die Längsachse L als Symmetrieachse gestaltet sind. Demgegenüber ist das weitere Stützelement rotationssymmetrisch, ebenfalls um die Längsachse L.

Der Rand der Innenbohrung 210 des Hauptelementes 21 ist zu einem hülsenartigen Ansatz 211 im Wesentlichen parallel zur Längsachse L gebogen. Ebenfalls weist die Innenbohrung 230 des weiteren Stützelements 23 einen derartigen hülsenartigen Ansatz 231 auf. Diese beiden Ansätze 211, 231 dienen dazu, die Verbindungsfläche zwischen dem Hauptelement 21 und Antriebswelle 3 sowie zwischen dem weiteren Stützelement 23 und Antriebswelle 3 zu vergrößern.

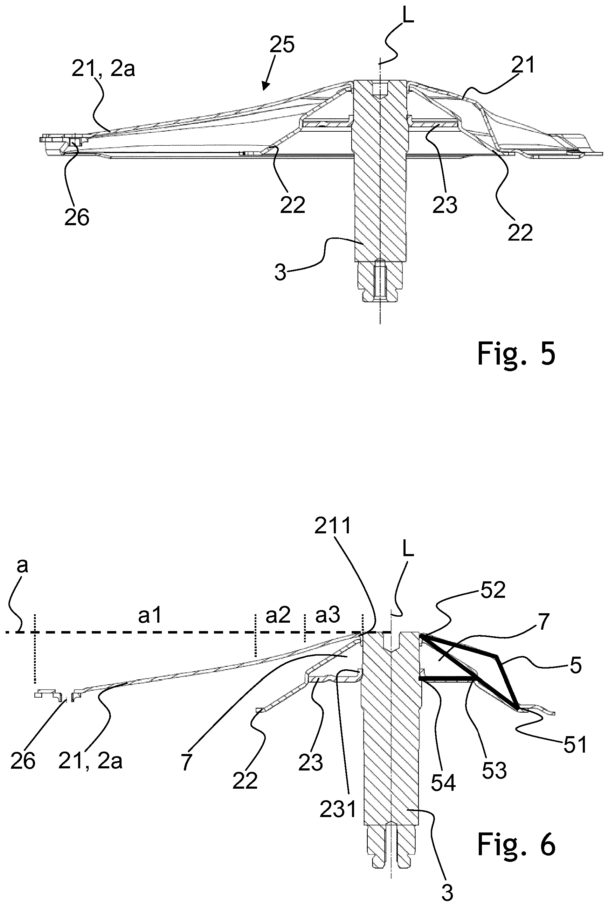

In der Fig. 5 ist ein Schnittbild der Flanschwellenvorrichtung 1 gezeigt. Die Schnittebene wird hierbei durch die Längsachse L und eine Armachse a aufgespannt. Die hierbei entstandenen Schnittkanten sind als schraffierte Flächen dargestellt. Das Hauptelement 21, das Stützelement 22 und das weitere Stützelement 23 sind aus stanzverformten Blechen, insbesondere Stahlblechen gebildet, vorzugsweise aus Edelstahl.

Fig. 6 zeigt eine Querschnittsansicht der Flanschwellenvorrichtung in der gleichen Schnittebene wie in Fig. 5. im Vergleich zu dem Schnittbild aus der Fig. 5 sind in der Querschnittsansicht ausschließlich die Schnittkanten der unterschiedlichen Elemente mit der Schnittebene dargestellt. Darüber hinaus sind in der Fig. 6 Hilfslinien eingezeichnet, um das mechanische Zusammenwirken der unterschiedlichen Elemente der Flanschwellenvorrichtung 1 zu veranschaulichen. Es sind insbesondere zwei unterschiedliche Merkmale, welche anhand der Fig. 6 nachfolgend erläutert werden sollen. Diese Merkmale können in anderen Ausführungsformen unabhängig voneinander eingesetzt werden, wirken in der vorliegenden Ausführungsform jedoch zusammen, um die Steifigkeit der Flanschwellenvorrichtung zu erhöhen. Zum einen handelt es um einen vorangehend erläuterten Anstieg einer Gesamtblechstärke, welcher in der Fig. 6 auf der linken Seite der Antriebswelle 3 verdeutlicht wird. Zum anderen wird das ebenfalls vorangehend erläuterte Vorhandensein dreieckiger Strukturen in der Fig. 6 auf der rechten Seite der Antriebswelle 3 verdeutlicht.

Eine in Fig. 6 als gestrichelte Linie eingezeichnete Armachse a des hier in Querschnitt sichtbaren Armes 2a des Hauptelementes 21 ist in drei Stärkenbereiche a1, a2, a3 eingeteilt. Bei der Armachse a, wie auch bei den anderen beiden Armachsen b, c, handelt es sich um eine radiale Achse. Der erste Stärkenbereich a1 ist die Projektion ausschließlich jenes Bereiches des Verbindungsflansches 2 auf die Armachse a, der lediglich das Hauptelement 21 aufweist. In dem zweiten Stärkenbereich a2 kommt noch das Stützelement 22 hinzu, während in dem dritten Stärkenbereich a3 auch noch das weitere Stützelement 23 einen Anteil hat. Bei Blechstärken des Hauptelementes 21 von 2 mm, des Stützelementes 22 von 2,25 mm und des weiteren Stützelementes 23 von 3 mm ergeben sich in den drei Stärkenbereichen a1, a2, a3 folgende Gesamtblechstärken für den Verbindungsflansch 2: Im ersten Stärkenbereich a1 ist die Gesamtblechstärke gleich der Blechstärke des Hauptelementes, nämlich ebenfalls 2 mm. Im zweiten Stärkenbereich a2 addieren sich die Blechstärken des Hauptelementes 21 und des Stützelementes 22 zu einer Gesamtblechstärke von 4,25 mm. Im dritten Stärkenbereich a3 addieren sich die Blechstärken des Hauptelementes 21, des Stützelementes 22 und des weiteren Stützelementes 23 zu einer Gesamtblechstärke von 7,25 mm.

Die zur Antriebswelle 3 hin ansteigende Gesamtblechstärke dient dazu, das Material des Verbindungsflansches 2 möglichst dort einzubringen, wo ein entsprechender Krafteintrag stattfindet. Nahe des Verbindungselementes 26 zur Verbindung mit der Trommel 4 sind die aufgrund von Biegemomenten auf den Verbindungsflansch 2 wirkenden Kräfte noch vergleichsweise gering. Diese Kräfte steigen entlang der Armachse a in Richtung zur Antriebswelle 3 an. Durch den dreistufigen Anstieg der Gesamtblechstärke steigt entsprechend die Steifigkeit des Verbindungsflansches 2 von außen zur Armachse 3 hin an, um dem Kräfteanstieg gerecht zu werden. Es ist noch zu beachten, dass in dieser Überlegung der aufgrund eines Doppelknicks im Wesentlichen vertikal verlaufende Abschnitt des Stützelementes 22 an seiner Verbindungsstelle zum weiteren Stützelement 23 nicht etwa zusätzlich zur ermittelten Gesamtblechstärken für den Verbindungsflansch 2 beiträgt, sonders es wird lediglich die Blechstärke der bei der Herstellung des Stützelementes 22 eingesetzten Stahlblechs berücksichtigt.

Der Abschnitt der Fig. 6 rechts von der Antriebswelle 3 dient der Erläuterung der Fachwerkstruktur. Die Fachwerkstruktur ist auch auf der linken Seite teilweise verwirklicht, nämlich mit dem durch das Stützelement 22, das weitere Stützelement 23 und der Antriebswelle 3 gebildete bzw. umschlossene Dreieck. Dieses Dreieck ist auch auf der rechten Seite erkennbar, da es rotationssymmetrisch ringförmig um die Antriebswelle 3 angeordnet ist. Auf der rechten Seite wird dieses Dreieck durch die Verbindungspunkte 52, 53 und 54 gebildet, welche zwischen dem Hauptelement 22 und der Antriebswelle 3, zwischen dem Stützelement 22 und dem weiteren Stützelement 23 und zwischen dem weiteren Stützelement 23 und der Antriebswelle 3 gebildet sind. Eine weitere dreieckförmige Struktur bzw. Dreieck 5, welche(s) für die Verteilung der Biegebelastungen zuständig ist, wird durch die Verbindungspunkte 51, 52 und einer Biegung aufgespannt, welche im Stahlblech des Hauptelementes 21 an einer dem Arm 21 in einer Verlängerung der Armachse 2a gegenüber liegenden Position gebildet ist. Der Schenkel des Dreiecks 5 zwischen den Verbindungspunkte 51 und 52 weist eine S-förmige Biegung im Stahlblech auf. Diese Biegung ist in der Fig. 5 deutlicher zu erkennen, da dort keine Hilfslinien für die Verdeutlichung des Dreiecks 5 die Sicht versperren. Diese Biegung hat jedoch wenig Einfluss auf den Versteifungseffekt des Schenkels zwischen den Verbindungspunkten 51 und 52, so dass die Strecke zwischen den Verbindungspunkten 51 und 52 für die Analyse der Kraftverteilung wie eine im Wesentlichen steife Strebe betrachtet werden kann.

Die Kraftverteilung in der in Fig. 6 dargestellten Struktur wird nachfolgend erläutert: Bei Krafteinleitung (aufgrund der hier nicht eingezeichneten Trommel 4) in axialer Richtung parallel zur Längsachse L am Verbindungselement 26, also am äußeren Ende des Armes 2a, wird eine Biegebelastung auf diesen Arm 2a des Hauptelementes 21 ausgeübt. Diese Belastung wird vom Hauptelement 21 auf die Antriebswelle 3 übertragen. Das Stützelement 22 und das weitere Stützelement 23 dienen zur Optimierung der Steifigkeit und zur Entlastung des Hauptelements 21 und der Antriebswelle 3, sowie zur Entlastung der Verbindungsstellen 52, 54 zwischen dem Verbindungsflansch 2 und der Antriebswelle 3. An diesen Verbindungsstellen 52, 54 treten die größten Biegebelastungen auf.

Über die Verbindungsstellen 51 und 52, sowie mit dem Einsatz des weiteren Stützelementes 23 und seiner Verbindung an der Verbindungsstelle 53 mit dem Stützelement 22 wird eine Tragwerkstruktur, insbesondere eine Fachwerkstruktur, aufgebaut. Bei Einleitung der axialen Kraft am Verbindungselement 26 in das Hauptelement 21 wird somit die Biegebelastung über die Verbindungsstelle 52 in das Stützelement 22 übertragen und über die Verbindungsstellen 53 am zweiten Stützelement 23 abgestützt. Dadurch kann eine erhebliche Reduzierung der auftretenden Belastungen in den Verbindungstellen 52 und 54 zur Antriebswelle 3 realisiert werden.

Um die Verbindungsfläche mit der Antriebswelle 3 zu vergrößern, weisen das Hauptelement 21 und das weitere Stützelement 23 wie vorangehend in Zusammenhang mit der Fig. 4 erläutert, an ihren Innenbohrungen 210, 230 jeweils einen die Antriebswelle 3 ringförmig umgreifenden hülsenförmigen Ansatz 211, 231 auf. Diese Ansätze 211, 231 sind mittels ringförmigen Schweißnähten, insbesondere mittels Laserschweißverfahren an der Antriebswelle 3 befestigt.

Das vorangehend beschriebene, in Fig. 6 sichtbare Dreieck aus den Verbindungspunkten 52, 53, 54 ist gleichzeitig der Querschnitt eines Hohlraums 6, welcher ringförmig um die Antriebswelle 3 gebildet ist. Aufgrund von ringförmigen Schweißnähten, welche das Stützelement 22 mit der Antriebswelle 3 (Verbindungspunkt 52), das Stützelement 22 mit dem weiteren Stützelement 23 (Verbindungspunkt 54) und das weitere Stützelement 23 mit der Antriebswelle 3 (Verbindungspunkt 53) verbinden, ist der Hohlraum 6 hermetisch abgedichtet, so dass keine Feuchtigkeit aus dem Laugenbehälter (in den Figuren nicht dargestellt) an den Oberflächenbereich der Antriebswelle 3 zwischen den beiden Schweißnähten an den Verbindungspunkten 52 und 54 kommen und dort zu einer Korrosion führen kann.

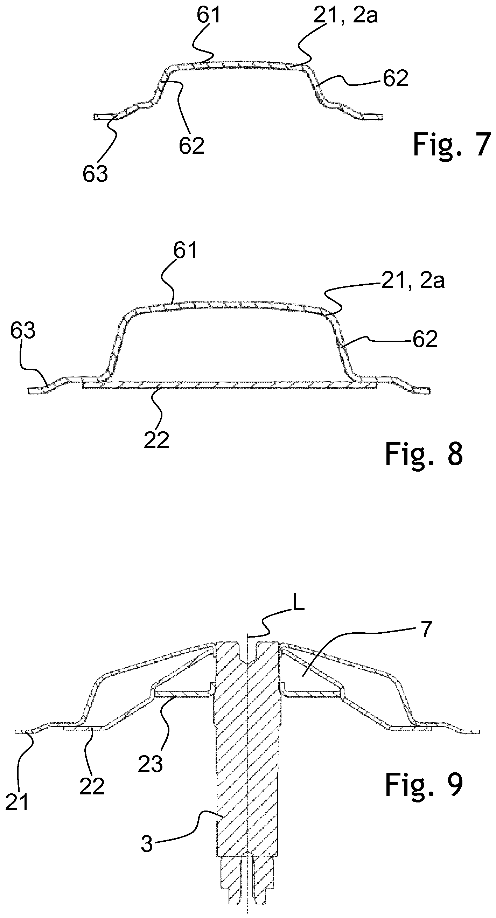

Jedes der drei Arme 2a, 2b, 2c des Hauptelementes 21 weist in einer zugehörigen Querschnittsebene senkrecht zur jeweiligen Armachse a, b, c einen hutförmigen Querschnitt auf, welcher sich in Richtung zur Längsachse L hin vergrößert. Mittels des Stützelementes 22 wird der hutförmige Querschnitt näher zur Längsachse hin, nämlich in dem Stärkenbereich a2 gemäß Fig. 6, zu einem kastenförmigen Querschnitt ergänzt. Schließlich kommt noch das weitere Stützelement 23 hinzu, so dass an der Antriebswelle 3 selbst eine Fachwerkstruktur wie in der Fig. 6 auf der rechten Seite angedeutet entsteht. Diese Verwandlung des Querschnitts des Armes 2a wird stellvertretend auch für die anderen beiden Arme 2b, 2c anhand der nachfolgenden Fig. 7, 8 und 9 erläutert.

Die Fig. 7 zeigt eine Querschnittsansicht der Flanschwellenvorrichtung 1 in der Querschnittsebene senkrecht zur Armachse a, fern von der Längsachse L. Hier ist die hutförmige Struktur erkennbar, welche sich aus einer Langseite 61, zwei sich hieran anschließenden Kurzseiten 62 und einer zur Langseite 61 in etwa parallel verlaufenden Wand 63 zusammensetzt. Die Querschnittsebene der Fig. 7 liegt, wenn man die Fig. 6 betrachtet, in etwa auf halbem Wege zwischen dem Stärkebereich a2 und dem Verbindungselement 26. Zum Verbindungselement 26 hin wird das hutförmige Profil abflachen, wie beispielsweise in der Fig. 3 erkennbar.

Eine Querschnittsansicht des Armes 2a in einer weiteren Querschnittsebene senkrecht zur Armachse a, jedoch näher zur Längsachse hin, nämlich im Stärkebereich a2, direkt am Stärkebereich a1 anschließend, wird in der Fig. 8 dargestellt. Hier ist deutlich sichtbar, dass der hutförmige Querschnitt zu einem kastenförmigen Querschnitt ergänzt wird, der sich aus der Langseite 61, den beiden Kurzseiten 62 und einem hier flachen Abschnitt des Stützelementes 22 zusammensetzt.

Schließlich zeigt Fig. 9 eine Querschnittsansicht des Armes 2a in einer weiteren Querschnittsebene senkrecht zur Armachse a, jedoch entlang der Längsachse L. wie in der Fig. 9 erkennbar ist, geht der zunächst hutförmige und dann kastenförmige Querschnitt in eine aus der Fig. 6 bereits bekannte Fachwerkstruktur über. Vorliegend ist allerdings die Fachwerkstruktur beidseitig der Antriebswelle 3 bzw. der Längsachse L identisch. Mithilfe des in den Fig. 7, 8 und 9 dargestellten Verlaufs des Querschnittsprofils wird das Steifigkeitsverhalten des Verbindungsflansches 2 entsprechend einer axial ansteigenden Biegebeanspruchung optimiert, indem das Widerstandsmoment über den gezielten Einsatz verschiedener Profiltypen in Achsrichtung entlang der Armachse a zur Antriebswelle 3 hin vergrößert wird. Dies geschieht beginnend mit einem Hutprofil gemäß Fig. 7 über ein geschlossenes Kastenprofil gemäß Fig. 8 bis zur zusätzlichen Verstrebung in einem fachwerkartigen Profil gemäß Fig. 9. Zudem wird im Außenbereich, also fern der Längsachse L, eine unnötige Materialdoppelung vermieden.

### Bezugszeichen

1 Flanschwellenvorrichtung
2 Verbindungsflansch
21 Hauptelement
2a, 2b, 2c Arme
a, b, c Armachsen
a1, a2, a3 Stärkenbereiche entlang einer radialen Achse
210 Innenbohrung, Hauptelement
211 hülsenförmiger Ansatz, Hauptelement
22 Stützelement
220 Innenbohrung, Stützelement
23 weiteres Stützelement
230 Innenbohrung, weiteres Stützelement
231 hülsenförmiger Ansatz, weiteres Stützelement
25 Flanschrückseite
26 Verbindungselement
3 Antriebswelle
L Längsachse
4 Trommel
41 Trommelboden
42 Trommelmantel
43 Trommelöffnung
5 dreieckförmige Struktur, Dreieck
51, 52, 53, 54 Verbindungspunkte
61 Langseite
62 Kurzseiten
63 Wand, Hutkrempe
7 Hohlraum

## Patentansprüche

1. Flanschwellenvorrichtung (1) zur drehbaren Lagerung einer Trommel (4) in einer Waschmaschine, mit einem Verbindungsflansch (2), welcher ausgebildet ist, gegen einen Trommelboden (41) der Trommel (4) angeordnet und mit der Trommel (4) befestigt zu werden, und einer im Zentrum des Verbindungsflansches (2) angeordneten und mit diesem verbundenen Antriebswelle (3) zur Verbindung mit einem Antriebsmotor, wobei der Verbindungsflansch (2) ein aus einem Stahlblech geformtes Hauptelement (21) und ein aus einem weiteren Stahlblech geformtes Stützelement (22) aufweist, welche entlang einer Längsachse (L) der Antriebswelle (3) aufeinander angeordnet sind,
**dadurch gekennzeichnet,**
**dass** eine Blechstärke des Hauptelementes (21) und/oder eine Gesamtblechstärke des Verbindungsflansches (2) entlang einer radialen Achse zur Längsachse hin zunimmt, wobei die Gesamtblechstärke als Summe aller Blechstärken der Elemente (21, 22, 23) definiert ist, welche sich an der betreffenden Radialposition auf der radialen Achse zum Verbindungsflansch (2) zusammensetzen.

2. Flanschwellenvorrichtung (1) nach Anspruch 1, **dadurch gekennzeichnet, dass** das Hauptelement (22) sternenförmig mit zumindest drei Armen ausgebildet ist, welche sich von der Antriebswelle (3) senkrecht zur Längsachse der Antriebswelle (3) jeweils entlang einer zugehörigen Armachse (a, b, c) radial nach außen erstrecken.

3. Flanschwellenvorrichtung (1) nach Anspruch 2, **dadurch gekennzeichnet, dass** zumindest einer der Arme (2a; 2b; 2c) in einer senkrecht zu seiner Armachse (a, b, c) verlaufenden Querschnittsebene einen hutförmigen Querschnitt aufweist.

4. Flanschwellenvorrichtung (1) nach Anspruch 3, **dadurch gekennzeichnet, dass** der hutförmige Querschnitt mittels des Stützelementes (22) zur Antriebswelle (3) hin zu einem kastenförmigen Querschnitt ergänzt wird.

5. Flanschwellenvorrichtung (1) nach einem der vorangehenden Ansprüche, **dadurch gekennzeichnet, dass** der Verbindungsflansch (2) ein weiteres Stützelement (23) aufweist, welches entlang der Längsachse derart am Stützelement (22) angeordnet ist, dass das Hauptelement (21), das Stützelement (22) und das weitere Stützelement (23) parallel zur Längsachse einen Stapel bilden.

6. Flanschwellenvorrichtung (1) nach einem der vorangehenden Ansprüche, **dadurch gekennzeichnet, dass** die Antriebswelle (3), das Hauptelement (21), das Stützelement (22) und/oder das weitere Stützelement (23) miteinander verlötet und/oder verschweißt sind.

7. Flanschwellenvorrichtung (1) nach Anspruch 6, **dadurch gekennzeichnet, dass** mittels der Verlötung(en) und/oder Verschweißung(en) ein hermetisch abgedichteter Hohlraum gebildet ist, welcher sich parallel zur Längsachse erstreckt und teilweise durch die Antriebswelle (3) begrenzt ist.

8. Flanschwellenvorrichtung (1) nach einem der vorangehenden Ansprüche, **dadurch gekennzeichnet, dass** die Antriebswelle (3), das Hauptelement (21), das Stützelement (22) und/oder das weitere Stützelement (23) in einer Schnittebene, in welcher die Längsachse verläuft, eine oder mehrere im Wesentlichen dreieckförmige Struktur(en) ausbilden.

9. Flanschwellenvorrichtung (1) nach Anspruch 8 soweit rückbezogen auf Anspruch 2, **dadurch gekennzeichnet, dass** die Schnittebene, in der die dreieckförmige(n) Struktur(en) ausgebildet sind, durch die Längsachse (L) und einem der Armachsen (a; b; c) aufgespannt ist.

10. Flanschwellenvorrichtung (1) nach einem der vorangehenden Ansprüche, **dadurch gekennzeichnet, dass** das Hauptelement (21), das Stützelement (22) und/oder das weitere Stützelement (23) als Stanz-Biege-Element(e) ausgebildet ist/sind.

11. Waschmaschine mit einem Laugenbehälter, einer Flanschwellenvorrichtung (1) nach einem der vorangehenden Ansprüche und einer mittels der Flanschwellenvorrichtung (1) in dem Laugenbehälter drehbar gehaltenen Trommel (4).

## Claims

1. Flanged-shaft apparatus (1) for rotatably mounting a drum (4) in a washing machine, having a connecting flange (2) which is designed to be arranged against a drum base (41) of the drum (4) and attached to the drum (4), and a drive shaft (3) arranged in the centre of the connecting flange (2) and connected thereto for connection to a drive motor, the connecting flange (2) comprising a main element (21) formed from a steel sheet and a supporting element (22) formed from a further steel sheet, which elements are arranged one on top of the other along a longitudinal axis (L) of the drive shaft (3),
**characterised in that**
a sheet thickness of the main element (21) and/or a total sheet thickness of the connecting flange (2) increases along a radial axis towards the longitudinal axis, the total sheet thickness being defined as the sum of all the sheet thicknesses of the elements (21, 22, 23) that combine at the relevant radial position on the radial axis to form the connecting flange (2).

2. Flanged-shaft apparatus (1) according to claim 1, **characterised in that** the main element (22) is of a star-shaped design having at least three arms, each of which extends radially outwards from the drive shaft (3) perpendicularly to the longitudinal axis of the drive shaft (3) and along an associated arm axis (a, b, c).

3. Flanged-shaft apparatus (1) according to claim 2, **characterised in that** at least one of the arms (2a; 2b; 2c) has a hat-shaped cross section in a cross-sectional plane extending perpendicularly to its arm axis (a, b, c).

4. Flanged-shaft apparatus (1) according to claim 3, **characterised in that** the hat-shaped cross section is supplemented by means of the supporting element (22) to form a box-shaped cross section towards the drive shaft (3).

5. Flanged-shaft apparatus (1) according to any of the preceding claims, **characterised in that** the connecting flange (2) has a further supporting element (23) that is arranged on the supporting element (22) along the longitudinal axis in such a way that the main element (21), the supporting element (22) and the further supporting element (23) form a stack in parallel with the longitudinal axis.

6. Flanged-shaft apparatus (1) according to any of the preceding claims, **characterised in that** the drive shaft (3), the main element (21), the supporting element (22) and/or the further supporting element (23) are soldered and/or welded together.

7. Flanged-shaft apparatus (1) according to claim 6, **characterised in that** a hermetically sealed cavity is formed by means of the soldering and/or welding, which cavity extends in parallel with the longitudinal axis and is in part delimited by the drive shaft (3).

8. Flanged-shaft apparatus (1) according to any of the preceding claims, **characterised in that** the drive shaft (3), the main element (21), the supporting element (22) and/or the further supporting element (23) forms one or more substantially triangular structures in a sectional plane in which the longitudinal axis extends.

9. Flanged-shaft apparatus (1) according to claim 8 when dependent on claim 2, **characterised in that** the sectional plane in which the triangular structure(s) is/are formed is defined by the longitudinal axis (L) and one of the arm axes (a; b; c).

10. Flanged-shaft apparatus (1) according to any of the preceding claims, **characterised in that** the main element (21), the supporting element (22) and/or the further supporting element (23) is/are designed as a stamped bending element or stamped bending elements.

11. Washing machine having a tub, a flanged-shaft apparatus (1) according to any of the preceding claims and a drum (4) rotatably held in the tub by means of the flanged-shaft apparatus (1).

## Revendications

1. Dispositif d'arbre à bride (1) permettant le montage rotatif d'un tambour (4) dans une machine à laver, comportant une bride de liaison (2) qui est conçue pour être disposée contre un fond de tambour (41) du tambour (4) et fixée au tambour (4), et un arbre d'entraînement (3) disposé au centre de la bride de liaison (2) et relié à celle-ci pour une liaison à un moteur d'entraînement, la bride de liaison (2) présentant un élément principal (21) formé d'une tôle d'acier et un élément de support (22) formé d'une autre tôle d'acier, lesquels sont disposés l'un au-dessus de l'autre le long d'un axe longitudinal (L) de l'arbre d'entraînement (3),
**caractérisé en ce**
**qu'**une épaisseur de tôle de l'élément principal (21) et/ou une épaisseur de tôle totale de la bride de liaison (2) augmente le long d'un axe radial vers l'axe longitudinal, l'épaisseur de tôle totale étant définie comme la somme de toutes les épaisseurs de tôle des éléments (21, 22, 23) qui, dans la position radiale pertinente sur l'axe radial, composent la bride de liaison (2).

2. Dispositif d'arbre à bride (1) selon la revendication 1, **caractérisé en ce que** l'élément principal (22) est réalisé en forme d'étoile avec au moins trois bras qui s'étendent radialement vers l'extérieur respectivement le long d'un axe de bras associé (a, b, c) depuis l'arbre d'entraînement (3) et perpendiculairement à l'axe longitudinal de l'arbre d'entraînement (3).

3. Dispositif d'arbre à bride (1) selon la revendication 2, **caractérisé en ce qu'**au moins l'un des bras (2a; 2b; 2c) présente une section transversale en forme de chapeau dans un plan de coupe transversale s'étendant perpendiculairement à son axe de bras (a, b, c).

4. Dispositif d'arbre à bride (1) selon la revendication 3, **caractérisé en ce que** la section transversale en forme de chapeau est complétée par l'élément de support (22) vers l'arbre d'entraînement (3) afin de former une section transversale en forme de caisson.

5. Dispositif d'arbre à bride (1) selon l'une des revendications précédentes, **caractérisé en ce que** la bride de liaison (2) présente un autre élément de support (23) qui est disposé le long de l'axe longitudinal sur l'élément de support (22) de telle manière que l'élément principal (21), l'élément de support (22) et l'autre élément de support (23) forment un empilement parallèlement à l'axe longitudinal.

6. Dispositif d'arbre à bride (1) selon l'une des revendications précédentes, **caractérisé en ce que** l'arbre d'entraînement (3), l'élément principal (21), l'élément de support (22) et/ou l'autre élément de support (23) sont brasés et/ou soudés les uns aux autres.

7. Dispositif d'arbre à bride (1) selon la revendication 6, **caractérisé en ce qu'**une cavité hermétiquement fermée est formée au moyen des brasures et/ou des soudures, laquelle cavité s'étend parallèlement à l'axe longitudinal et est partiellement délimitée par l'arbre d'entraînement (3).

8. Dispositif d'arbre à bride (1) selon l'une des revendications précédentes, **caractérisé en ce que** l'arbre d'entraînement (3), l'élément principal (21), l'élément de support (22) et/ou l'autre élément de support (23) forment une ou plusieurs structures sensiblement triangulaires dans un plan de coupe dans lequel s'étend l'axe longitudinal.

9. Dispositif d'arbre à bride (1) selon la revendication 8 dépendant de la revendication 2, **caractérisé en ce que** le plan de coupe dans lequel sont formées la ou les structures triangulaires est tendu par l'axe longitudinal (L) et l'un des axes de bras (a; b; c).

10. Dispositif d'arbre à bride (1) selon l'une des revendications précédentes, **caractérisé en ce que** l'élément principal (21), l'élément de support (22) et/ou l'autre élément de support (23) sont réalisés sous forme d'éléments d'estampage et de pliage.

11. Machine à laver comportant une cuve de lessivage, un dispositif d'arbre à bride (1) selon l'une des revendications précédentes et un tambour (4) maintenu rotatif dans la cuve de lessivage au moyen du dispositif d'arbre à bride (1).
